# FASCICULE DE BREVET EUROPEEN

(11) **EP 0 810 272 B1**
(45) Date de publication et mention de la délivrance du brevet: **21.03.2001**
(21) Numéro de dépôt: 97401143.9
(22) Date de dépôt: 26.05.1997
(51) Int. Cl.: C09D 9/00

(54) **Composition décapante à base d'un solvant aprotique polaire, d'un éther et d'eau**
Abbeizmittelzusammensetzung auf Basis von einem polaren, aprotischen Lösungsmittel, einem Ether und Wasser
Paint removing composition based on an aprotic polar solvent, an ether and water

(30) Priorité: 31.05.1996 FR 9606735
(43) Date de publication de la demande: 03.12.1997
(73) Titulaire: Atofina, 92800 Puteaux (FR)
(72) Inventeur: Lallier, Jean-Pierre, 92400 Courbevoie (FR)

(56) Documents cités:
- EP-A- 0 490 726
- EP-A- 0 573 339
- EP-A- 0 648 820
- DE-A- 3 325 166
- US-A- 4 401 748
- US-A- 5 232 515

## Description

La présente invention concerne une composition décapante de peintures, vernis ou laques recouvrant un substrat.

Les décapants pour peintures et vernis ou laques sont utilisés de deux façons : par dépôt ou par immersion. Les décapants appliqués par dépôt le sont généralement par brossage ou spray. Ils contiennent presque toujours un épaississant et sont utilisés à température ambiante (20°C). On les utilise pour des petits travaux ou pour des objets à décaper ne pouvant être immergés. Dans cette catégorie, entrent le décapage grand public, le décapage professionnel bâtiment et le décapage aéronautique. Les décapants par immersion utilisent soit des bains froids (souvent à base de chlorure de méthylène) ou soit des bains chauds (souvent à base de soude caustique). Ils sont surtout utilisés pour le décapage d'un nombre élevé de petites pièces (décapage industriel).

On connaît déjà de EP 0490 726 une composition décapante comprenant en volume de 1 à 20 % de diméthylsulfoxyde (DMSO) et de 99 à 80 % d'un éther tel que le tétrahydrofuranne.

Il est déjà connu de EP 0573 339 une composition décapante comprenant en volume de 1 à 20 % de DMSO, et de 99 à 80 % d'un éther présentant un point éclair supérieur à 0°C, un volume molaire inférieur à 160 et une molécule pourvue d'un ou plusieurs groupes méthoxy ; cet éther peut être notamment l'anisole.

Ces deux compositions décapantes ci-dessus, bien que très efficaces dans leur action décapante présentent toutefois l'inconvénient d'être coûteuses.

Par ailleurs, WO 93/07227 divulgue l'addition d'eau à des solvants ou à des mélanges de solvants estimés efficaces en décapage peinture. Ce document décrit des compositions contenant 1°/ au moins un solvant organique choisi parmi l'acétate d'éthyle, la méthyl éthyl cétone, le toluène, 2°/ de l'eau, 3°/ au moins un épaississant et 4°/ au moins un surfactant.

L'efficacité de ces compositions est simplement proportionnelle à la quantité de solvant organique utilisée et de toute façon, inférieure à l'efficacité du solvant pur.

Ainsi, il existe un besoin dans l'industrie des décapants de trouver d'autres compositions dont le coût soit moindre, mais qui soient au moins aussi efficace que les compositions de l'art antérieur.

La Demanderesse a trouvé que des compositions aqueuses du type eau-solvant avaient une efficacité en décapage peinture plus élevée que celle du solvant utilisé sans eau.

Plus précisément la présente invention réside dans une composition décapante de peintures, vernis ou laques, caractérisée en ce qu'elle comporte au moins les trois constituants suivants :
1/ du diméthylsulfoxyde (DMSO),
2/ un éther choisi parmi l'anisole et le tétrahydrofurane(THF),
3/ de l'eau.

Par exemple, l'association de ces trois constituants est bien plus efficace que chacune des trois compositions binaires DMSO-éther, DMSO-eau et eau-éther. Pour certaines compositions de ces trois constituants, des résultats surprenants en terme de briéveté de la durée de décapage ont été obtenus. L'eau agit en tant que constituant au côté du DMSO et de l'éther. Cette invention peut être utilisée dans les différents secteurs du décapage des peintures :
- décapage grand public,
- décapage professionnel bâtiment,
- décapage industriel,
- décapage aéronautique.

Avantageusement, les constituants sont présents dans les proportions suivantes :
1/ de 1 à 75 parties en poids de DMSO,
2/ de 10 à 90 parties en poids d'éther,
3/ de 1 à 90 parties en poids d'eau.

De préférence, la composition comprend :
1/ de 25 à 65 parties en poids de DMSO,
2/ de 10 à 40 parties en poids d'éther,
3/ de 10 à 40 parties en poids d'eau.

De manière avantageuse, la composition comprend :
1/ 10 parties en poids de DMSO,
2/ 25 parties en poids d'anisole,
3/ 62 parties en poids d'eau.

Avantageusement, la composition comprend :
1/ 50 parties en poids de DMSO,
2/ 25 parties en poids d'anisole,
3/ 25 parties en poids d'eau.

Avantageusement, la composition comprend :
1/ 70 parties en poids de DMSO,
2/ 15 parties en poids de THF,
3/ 15 parties en poids d'eau.

Avantageusement, la composition comprend :
1/ 50 parties en poids de DMSO,
2/ 25 parties en poids de THF,
3/ 25 parties en poids d'eau.

De préférence, la composition selon l'invention contient un ou plusieurs autres constituants choisis parmi un activateur, un épaississant, un inhibiteur de corrosion.

L'activateur peut être par exemple choisi parmi la monoéthanolamine, l'ammoniaque à 30% dans l'eau, l'acide formique.

L'épaississant peut être par exemple un composé cellulosique ou polyacrylique.

L'inhibiteur de corrosion peut être par exemple le benzoate de sodium.

En plus de la description précédente, l'invention sera mieux comprise à l'aide des exemples suivants.

Dans tous ces exemples la teneur de chaque constituant des compositions est indiquée en pourcentage en poids sur la base du poids total de la composition.

### Exemple 1 : ternaire DMSO-anisole-eau

Pour l'utilisation des compositions dans le secteur industriel (immersion à chaud 40°C), on a utilisé des peintures de l'industrie automobile. Les peintures sont des laques polyester Blanc Glacier 389 d'HERBERTS, fournies par la société ÉTALON (France). L'épaisseur du revêtement est de 35 à 45 µm. Les plaques métalliques utilisées sont en acier phosphaté et ont une surface recouverte rectangulaire de 90 x 190 mm. Les performances sur ces plaques sont généralisables à d'autres peintures plus faciles à décaper que les peintures polyester, ce qui est généralement le cas pour les glycéro-phtaliques, les alkydes et les acryliques. L'effet de synergie du ternaire DMSO-anisole-eau est clairement montré par les résultats suivants figurant dans le tableau I:

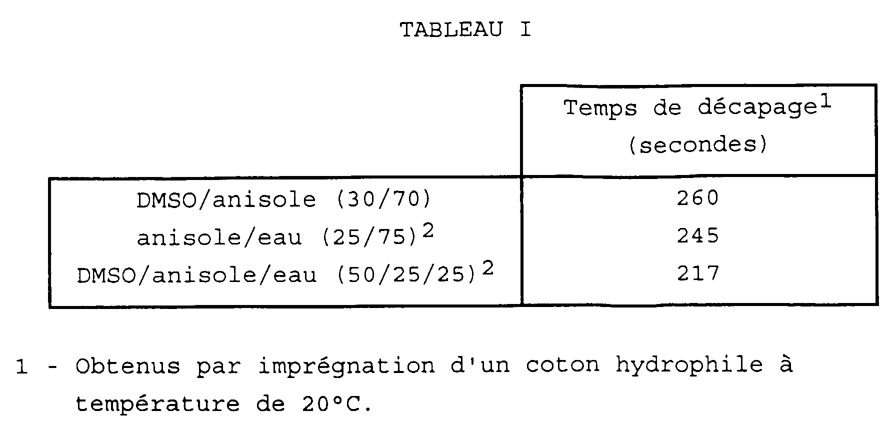

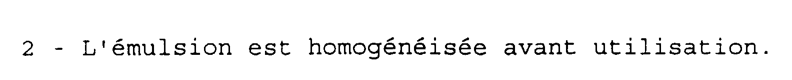

Le DMSO pur ne conduit à aucun décapage au bout de 4 heures et l'anisole pur donne un temps de 410 secondes.

### Exemple 2 : Ternaire DMSO-anisole-eau en décapage industriel (peintures polyester)

Les plaques, les peintures ainsi que leur dépôt sont identiques à ceux de l'exemple 1. Les essais sont ici effectués dans un bain agité à 40°C par immersion simulant les conditions de décapage industriel.
L'effet de synergie du ternaire DMSO-anisole-eau est clairement montré par les résultats suivants du tableau II:

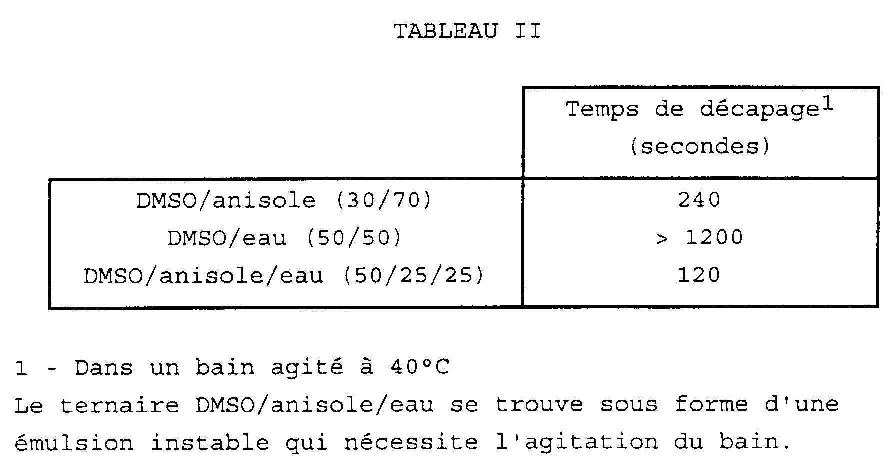

### Exemple 3 : Ternaire DMSO-anisole-eau en décapage industriel (peintures époxy)

Pour cet exemple, la peinture testée est une cataphorèse époxy AC 27 d'HERBERTS fournie par la société ETALON. Le ternaire a été comparé au système binaire DMSO/oxyde de benzyle(OB). L'intérêt de ce mélange est de pouvoir élever la température au-delà de 40°C lorsqu'on est en présence d'une peinture difficile à décaper. Le point éclair relativement élevé de l'oxyde de benzyle (supérieur à 100°C) permet l'utilisation de températures supérieures à 40°C. Le système DMSO/oxyde de benzyle constitue une référence intéressante pour le décapage industriel. L'efficacité du ternaire DMSO-anisole-eau est clairement indiquée par les résultats suivants du tableau III:

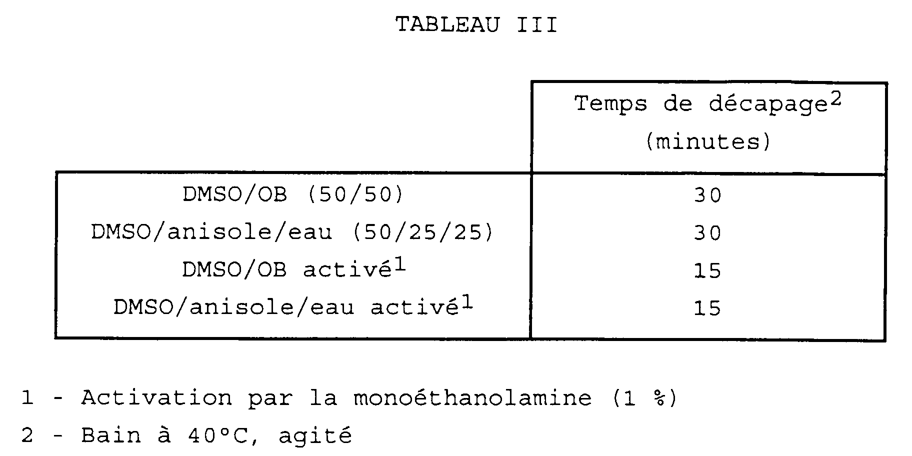

### Exemple 4 : ternaire DMSO-anisole-eau sur une peinture glycéro-phtalique

Au bout de 30 min., le ternaire DMSO-anisole-eau décape six couches de 25 µm d'épaisseur d'une peinture glycéro-phtalique déposée sur bois. Cette efficacité est obtenue en utilisant les proportions suivantes : DMSO/anisole/eau = 50/25/25. On obtient les mêmes performances avec le système DMSO/anisole (30/70).

### Exemple 5 : ternaire DMSO-THF-eau

Sur la même peinture et dans les mêmes conditions que l'exemple 1, le ternaire DMSO-THF-eau a été étudié. Le THF est un agent gonflant des peintures bien connu comme cela est décrit dans le brevet CH 670832. Toutefois, ce solvant reste très inflammable et difficile d'utilisation. Par rapport au THF pur, l'addition de DMSO et d'eau permet d'obtenir une nette amélioration du temps de décapage, comme on peut le voir sur le tableau IV suivant:

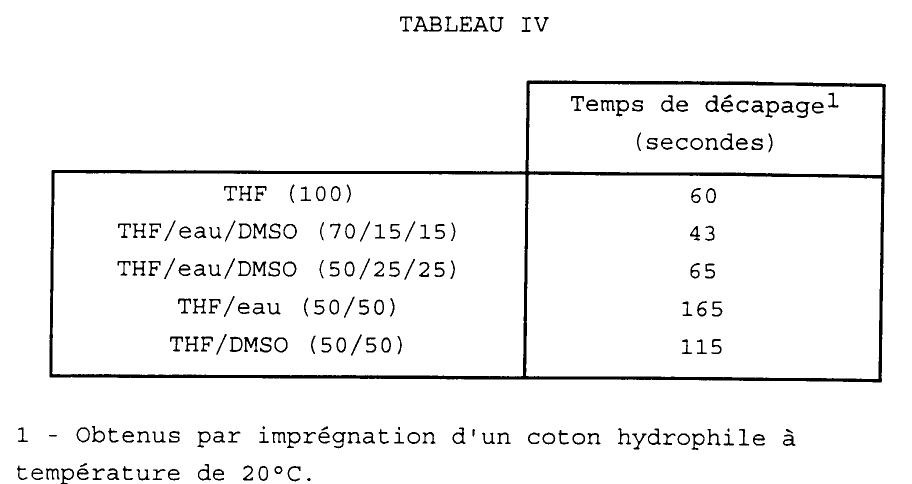

### Exemple 6 : ternaire DMSO-anisole-eau épaissi

En choisissant certaines gammes de composition du ternaire, on peut aisément l'épaissir avec un épaississant cellulosique. Nous avons optimisé la formule suivante : DMSO (10 %) - anisole (25 %) - eau (62 %) - méthocell (3 %). L'efficacité de cette formule épaissie a été vérifiée sur plusieurs peintures: un crépi acrylique, une glycéro-phtalique et un polyester. Nous avons comparé cette formule à un décapant épaissi concurrent contenant de la NMP (10 %) (N-méthyl-pyrrolidone), du DBE (40 %) (dibasic ester), de l'eau (48,7 %) et du méthocell (1,3 %). Au bout d'une heure, le crépi acrylique est gratté. La formule à base de DMSO permet d'atteindre le substrat. Sur la peinture glycéro, la formule à base de DMSO attaque trois couches de 25 µm chacune en 30 minutes. Enfin sur le polyester, la formule à base de DMSO donne un temps de l'ordre de 40 minutes. Pour la formule concurrente à base de NMP, l'attaque du crépi acrylique n'est que partielle au bout d'une heure (on n'atteint pas le substrat). On obtient aucun effet sur peinture glycéro-phtalique au bout d'une heure. Enfin, le temps de décapage sur le polyester est supérieur à 4 heures.

Ces résultats montrent donc bien l'avantage de notre formule sur la formule concurrente.

## Revendications

1. Composition décapante de peintures, vernis ou laques, caractérisée en ce qu'elle comporte au moins les trois constituants suivants :
1/ du diméthylsulfoxyde (DMSO),
2/ un éther choisi parmi l'anisole et le tétrahydrofurane (THF),
3/ de l'eau.

2. Composition selon la revendication 1, caractérisée en ce que les constituants sont présents dans les proportions suivantes :
1/ de 1 à 75 parties en poids de DMSO,
2/ de 10 à 90 parties en poids d'éther,
3/ de 1 à 90 parties en poids d'eau.

3. Composition selon la revendication 2, caractérisée en ce que les constituants sont présents dans les proportions suivantes :
1/ de 25 à 65 parties en poids de DMSO,
2/ de 10 à 40 parties en poids d'éther,
3/ de 10 à 40 parties en poids d'eau.

4. Composition selon la revendication 3, caractérisée en ce qu'elle comprend :
1/ 50 parties en poids de DMSO,
2/ 25 parties en poids d'anisole (l'éther),
3/ 25 parties en poids d'eau.

5. Composition selon la revendication 2, caractérisée en ce qu'elle comprend :
1/ 10 parties en poids de DMSO,
2/ 25 parties en poids d'anisole (éther),
3/ 62 parties en poids d'eau.

6. Composition selon la revendication 2, caractérisée en ce,qu'elle comprend :
1/ 70 parties en poids de DMSO,
2/ 15 parties en poids de THF (éther),
3/ 15 parties en poids d'eau.

7. Composition selon la revendication 3, caractérisée en ce qu'elle comprend :
1/ 50 parties en poids de DMSO (solvant polaire aprotique),
2/ 25 parties en poids de THF (éther),
3/ 25 parties en poids d'eau.

8. Composition selon l'une des revendications 1 à 7, caractérisée en ce qu'elle contient un ou plusieurs autres constituants choisis parmi un activateur, un épaississant, un inhibiteur de corrosion.

## Claims

1. Stripping composition for paints, varnishes or lacquers, characterized in that it comprises at least the following three constituents:
1) dimethyl sulphoxide (DMSO),
2) an ether chosen from anisole and tetrahydrofuran (THF),
3) water.

2. Composition according to Claim 1, characterized in that the constituents are present in the following proportions:
1) from 1 to 75 parts by weight of DMSO,
2) from 10 to 90 parts by weight of ether,
3) from 1 to 90 parts by weight of water.

3. Composition according to Claim 2, characterized in that the constituents are present in the following proportions:
1) from 25 to 65 parts by weight of DMSO,
2) from 10 to 40 parts by weight of ether,
3) from 10 to 40 parts by weight of water.

4. Composition according to Claim 3, characterized in that it includes:
1) 50 parts by weight of DMSO,
2) 25 parts by weight of anisole (the ether),
3) 25 parts by weight of water.

5. Composition according to Claim 2, characterized in that it includes:
1) 10 parts by weight of DMSO,
2) 25 parts by weight of anisole (ether),
3) 62 parts by weight of water.

6. Composition according to Claim 2, characterized in that it includes:
1) 70 parts by weight of DMSO,
2) 15 parts by weight of THF (ether),
3) 15 parts by weight of water.

7. Composition according to Claim 3, characterized in that it includes:
1) 50 parts by weight of DMSO (aprotic polar solvent),
2) 25 parts by weight of THF (ether),
3) 25 parts by weight of water.

8. Composition according to one of Claims 1 to 7, characterized in that it contains one or a number of other constituents chosen from an activator, a thickener and a corrosion inhibitor.

## Patentansprüche

1. Abbeizmittel für Farben, Firnisse oder Lacke, dadurch gekennzeichnet, daß es mindestens die drei folgenden Bestandteile enthält:
1) Dimethylsulfoxid (DMSO),
2) Ether, gewählt aus Anisol und Tetrahydrofuran (THF),
3) Wasser.

2. Abbeizmittel nach Anspruch 1, dadurch gekennzeichnet, daß die Bestandteile in den folgenden Anteilen vorliegen:
1) 1 bis 75 Gew.-Teile DMSO,
2) 10 bis 90 Gew.-Teile Ether,
3) 1 bis 90 Gew.-Teile Wasser.

3. Abbeizmittel nach Anspruch 2, dadurch gekennzeichnet, daß die Bestandteile in den folgenden Anteilen vorliegen:
1) 25 bis 65 Gew.-Teile DMSO,
2) 10 bis 40 Gew.-Teile Ether,
3) 10 bis 40 Gew.-Teile Wasser.

4. Abbeizmittel nach Anspruch 3, dadurch gekennzeichnet, daß es enthält:
1) 50 Gew.-Teile DMSO,
2) 25 Gew.-Teile Anisol (Ether),
3) 25 Gew.-Teile Wasser.

5. Abbeizmittel nach Anspruch 2, dadurch gekennzeichnet, daß es enthält:
1) 10 Gew.-Teile DMSO,
2) 25 Gew.-Teile Anisol (Ether),
3) 62 Gew.-Teile Wasser.

6. Abbeizmittel nach Anspruch 2, dadurch gekennzeichnet, daß es enthält:
1) 70 Gew.-Teile DMSO,
2) 15 Gew.-Teile THF (Ether),
3) 15 Gew.-Teile Wasser.

7. Abbeizmittel nach Anspruch 3, dadurch gekennzeichnet, daß es enthält:
1) 50 Gew.-Teile DMSO (polares aprotisches Lösungsmittel),
2) 25 Gew.-Teile THF (Ether),
3) 25 Gew.-Teile Wasser.

8. Abbeizmittel nach einem der Ansprüche 1 bis 7, dadurch gekennzeichnet, daß es einen oder mehrere andere Bestandteile enthält, die aus einem Aktivator, einem Verdickungsmittel, einem Korrosionsinhibitor gewählt sind.
